# EUROPÄISCHE PATENTSCHRIFT

(11) **EP 2 041 212 B1**
(45) Veröffentlichungstag und Bekanntmachung des Hinweises auf die Patenterteilung: **27.10.2010**
(21) Anmeldenummer: 07765662.7
(22) Anmeldetag: 27.06.2007
(51) Int. Cl.: C08J 9/00, C08J 9/14, C08L 25/06, C08L 25/00, C08L 53/00, B29C 44/34

(54) **VERFAHREN ZUR HERSTELLUNG NANOPORÖSER FORMTEILE**
METHOD FOR PRODUCING NANOPOROUS MOLDED PARTS
Procédé de fabrication de pièces moulées nanoporeuses

(30) Priorität: 06.07.2006 EP 06116713
(43) Veröffentlichungstag der Anmeldung: 01.04.2009
(73) Patentinhaber: BASF SE, 67056 Ludwigshafen (DE)
(72) Erfinder: GUERIN MOREIRA, Andre, 67063 Ludwigshafen (DE); BOTHE, Marc, 67117 Limburgerhof (DE); SCHÄDLER, Volker, 67487 Maikammer (DE); ALLMENDINGER, Markus, 67480 Edenkoben (DE); SAMPAIO LOPES, Pedro Manuel, 4465 Leca Do Balio (PT); SOWART, Bernd, 67098 Bad Dürkheim (DE); FRANCIS, Timothy, 68789 St. Leon-rot (DE); WASSNER, Erik, 68163 Mannheim (DE); SCHADE, Christian, 67063 Ludwigshafen (DE); LONGO, Daniela, 53721 Siegburg (DE); LIETZ, Siljana, 95448 Bayreuth (DE); ALTSTÄDT, Volker, 21224 Rosengarten (DE); SANDLER, Jan Kurt Walter, 95447 Bayreuth (DE)
(86) Internationale Anmeldenummer: PCT/EP2007/056408
(87) Internationale Veröffentlichungsnummer: WO 2008/003623

(56) Entgegenhaltungen:
- EP-A2- 0 682 076
- WO-A-2005/049708
- WO-A-2005/092959
- WO-A-2005/095501
- DE-A1- 19 710 442
- US-A- 4 152 495
- US-A- 5 272 182
- US-A- 5 387 617
- US-A1- 2003 022 990

## Beschreibung

Die Erfindung betrifft ein Verfahren zur Herstellung von Formteilen aus nanoporösen Polymerwerkstoffen, umfassend die Stufen
a) Herstellen einer mehrphasigen Polymermischung mit Domänen im Bereich von 5 bis 200 nm,
b) Imprägnieren der Polymermischung mit einem Treibmittel, wobei die Löslichkeit des Treibmittels in der die Domänen bildenden Phase mindestens doppelt so hoch ist wie in den angrenzenden Phasen,
c) Expandieren der treibmittelhaltigen, mehrphasigen Polymermischung, indem die Polymermischung in eine Kavität eingebracht und darin expandiert wird, wodurch man das Formteil erhält.

Formteile aus nanoporösen Polymerwerkstoffen - nachfolgend kurz als nanoporöse Formteile bezeichnet - weisen im Vergleich zu konventionellen Formteilen aus makroporösen Polymerwerkstoffen nicht nur eine reduzierte Wärmeleitfähigkeit auf, sondern auch vorteilhafte mechanische Eigenschaften. Insbesondere zeigen sie eine höhere Zähigkeit, wodurch sie beständiger gegen Schlag- und Stoßbeanspruchung sind, und weisen ein besseres Verhalten bei dynamischer Langzeitbeanspruchung auf, beispielsweise eine geringere Ausbreitung von Ermüdungsrissen.

In der WO 2005/092959 A1 wird u.a. Verfahren zur Herstellung von nanoporösen Polymerschaumstoffen beschrieben, umfassend die Stufen
a) Herstellen einer mehrphasigen Polymermischung mit Domänen im Bereich von 5 bis 200 nm,
b) Imprägnieren der Polymermischung mit einem Treibmittel, wobei die Löslichkeit des Treibmittels in der die Domänen bildenden Phase mindestens doppelt so hoch ist, als in den angrenzenden Phasen,
c) Expandieren der treibmittelhaltigen, mehrphasigen Polymermischung.

Gemäß Seite 5, Zeile 14 bis Seite 6, Zeile 3 der Beschreibung werden die Stufen a) und b) in einem Extruder vorgenommen und die treibmittelbeladene Schmelze durch eine Düse zu Schaumstoffplatten, -strängen oder-Partikeln extrudiert und geschnitten. Alternativ kann die aus der Düse austretende Schmelze mittels Unterwassergranulierung bei geeignetem Gegendruck zu expandierbaren oder angeschäumten Partikeln geschnitten werden. Um Formteile herzustellen, müssen die erhaltenen Partikel in einem separaten Arbeitsschritt verklebt oder durch Wasserdampf verschweißt werden.

Die Herstellung von Formteilen beliebiger (auch komplizierter) Raumform in Schritt c) unmittelbar aus der Schmelze wird nicht beschrieben.

Es bestand die Aufgabe, ein verbessertes Verfahren zur Herstellung nanoporöser Formteile zu finden. Mit dem Verfahren sollten sich nanoporöse Formteile auf einfache Weise und in wenigen Schritten herstellen lassen. Auch nanoporöse Formteile mit anspruchsvoller Raumform sollten problemlos herstellbar sein.

Insbesondere sollte ein Verfahren zur Herstellung nanoporöser Formteile zur Verfügung gestellt werden, das ohne Verkleben oder Verschweißen von separat erhaltenen Partikeln auskommt. Des Weiteren sollte das Verfahren die Herstellung von Formteilen unmittelbar aus der Schmelze ermöglichen.

Außerdem sollten sich mit dem Verfahren Formteile mit besseren optischen Oberflächeneigenschaften, insbesondere höherem Oberflächenglanz, herstellen lassen.

Demgemäß wurde das eingangs definierte Verfahren gefunden. Bevorzugte Ausführungsformen der Erfindung sind den Unteransprüchen zu entnehmen. Alle Druckangaben sind Absolutdrücke.

In Stufe a) wird eine mehrphasige Polymermischung mit Domänen im Bereich von 5 bis 200 nm hergestellt. Bevorzugt sind dabei Domänen im Bereich von 10 bis 80 nm. Die Größe der Domänen wird bevorzugt mittels Transmissionselektronenmikroskopie an dünnen Schichten und anschließender bildanalytischer Auswertung ermittelt.

Es ist aus dem Bereich der mehrphasigen Polymersysteme bekannt, dass die meisten Polymere nicht oder nur geringfügig miteinander mischbar sind (Flory), so dass es je nach Temperatur, Druck und chemischer Zusammensetzung zur Entmischung in jeweilige Phasen kommt. Werden unverträgliche Polymere kovalent miteinander verknüpft, so findet die Entmischung nicht auf makroskopischer, sondern lediglich auf mikroskopischer Ebene statt, d.h. auf der Längenskala der einzelnen Polymerkette. In diesem Fall spricht man daher von Mikrophasenseparation. Daraus resultieren eine Vielzahl von mesoskopischen Strukturen, z.B. lamellare, hexagonale, kubische, gyroide und bikontinuierliche Morphologien, die eine starke Verwandtschaft mit lyotropen Phasen aufweisen; siehe z.B. Hamley: The Physics of Blockcopolymers, Oxford University Press, Oxford 1998. Darüber hinaus gibt es andere Möglichkeiten eine Mikrophasenseparation in Polymerschmelzen zu erzeugen, z.B. das Einbringen von Partikeln aus Emulsionspolymerisaten.

In einer bevorzugten Ausführungsform 1) des erfindungsgemäßen Verfahrens besteht die Domänen bildende Phase im Wesentlichen aus durch Emulsionspolymerisation erhältlichen Teilchen. Insbesondere handelt es sich um Kern-Schale-Teilchen. Die Emulsionspolymerisation wird in üblicher Weise, z.B. in Wasser und unter Mitverwendung geeigneter Emulgatoren und Initiatoren durchgeführt. Für die Kern-Schale-Teilchen stellt man in der Regel zunächst den Kern her, auf den dann die Schalenmonomere aufgepfropft werden.

Besonders bevorzugt sind die Teilchen Kern-Schale-Teilchen mit einem Kern aus einem Polyacrylat oder Polymethacrylat, insbesondere aus Polymethylmethacrylat (PMMA). Ebenfalls besonders bevorzugt sind die Teilchen Kern-Schale-Teilchen mit mindestens einer Schale aus Polystyrol oder Styrol-Acrylnitril-Copolymer. Auch Teilchen mit zwei oder mehr Schalen sind geeignet, wobei die einzelnen Schalen beispielsweise aus Polyacrylat, Polymethacrylat, Polystyrol oder Styrolcopolymeren (z.B. mit Acrylnitril) bestehen können.

In einer anderen Ausführungsform 2) ist das Verfahren **dadurch gekennzeichnet, dass** die Domänen bildende Phase im Wesentlichen aus Blockcopolymeren mit unverträglichen Blöcken besteht. Solche Blockcopolymere sind beispielsweise Styrol-Butadien- oder Styrol-Isopren-Blockcopolymeren. Man kann Zweiblock-, Dreiblock- oder Multiblockcopolymere verwenden, deren einzelne Blöcke z.B. Homopolymere, statistische oder tapered (Gradienten)-Copolymere sein können. Der Aufbau der Blockcopolymere kann beispielsweise linear, kammartig oder sternförmig sein. Derartige Blockcopolymere sind bekannt.

In beiden Ausführungsformen 1) und 2) enthält die Polymermischung neben den Kern-Schale-Teilchen bzw. dem Blockcopolymer außerdem ein thermoplastisches Polymer, bevorzugt ein Styrolpolymer. Der Begriff Styrolpolymer schließt Styrolhomo- und -copolymere ein, beispielsweise Standardpolystyrol, schlagzähes - d.h. Butadien- oder Isoprenkautschuk-haltiges - Polystyrol, außerdem Copolymere des Typs Styrol-Acrylnitril (SAN), Acrylnitril-Butadien-Styrol (ABS), Acrylnitril-Styrol-Acrylester (ASA), Styrol-Maleinsäureanhydrid (SMA) und Styrol-Methylmethacrylat (SMMA). Auch die SMA- bzw. SMMA-Polymere können schlagzäh (kautschukhaltig) sein. Diese Polymere sind bekannt und handelsüblich.

Bevorzugt enthält die Polymermischung in beiden Ausführungsformen 1) und 2) 20 bis 99,99 Gew.-%, insbesondere 50 bis 99,9 und besonders bevorzugt 80 bis 99,5 Gew.-% eines Styrolpolymers.

Ebenfalls bevorzugt enthält die Polymermischung in Ausführungsform 1) 0,01 bis 40, insbesondere 0,1 bis 20,vorzugsweise 0,3 bis 10 und besonders bevorzugt 0,5 bis 5 Gew.-% der Kern-Schale-Teilchen. Gleichfalls bevorzugt enthält die Polymermischung in Ausführungsform 2) 0,01 bis 40, insbesondere 0,1 bis 20,vorzugsweise 0,3 bis 10 und besonders bevorzugt 0,5 bis 5 Gew.-% der Blockcopolymere mit unverträglichen Blöcken.

Die in den obigen Ausführungsformen 1) bzw. 2) an 100 Gew.-% fehlenden Gew.-% sind übliche Zusatzstoffe, die fakultativ mitverwendet werden können. Geeignet sind u.a. dem Fachmann bekannte Keimbildner, Weichmacher, Flammschutzmittel, lösliche und unlösliche anorganische bzw. organische Farbstoffe und Pigmente, Füllstoffe oder Antistatika. Sie werden ggf. in solchen Mengen zugesetzt, die die Domänenbildung und daraus resultierenden Nanoporen nicht beeinträchtigen. Die Zusatzstoffe können in Stufe a) und/oder in Stufe b) des Verfahrens zugefügt werden.

In Stufe b) imprägniert man die Polymermischung mit einem Treibmittel, wobei die Löslichkeit des Treibmittels in der die Domänen bildenden Phase mindestens doppelt so hoch ist wie in den angrenzenden Phasen.

Wesentlich ist die nicht-homogene Verteilung des Treibmittels in der mehrphasigen Polymermischung, die segregierte mesoskopische Bereiche im Nanometerbereich bilden. Diese Domänen haben ein höheres Sorptionsvermögen im Hinblick auf das Treibmittel als die umgebende Matrix. Beispielsweise liegen in einem A-B-Diblockcopolymer, wobei das Treibmittel bezüglich des Blocks A eine deutlich höhere Löslichkeit aufweist als bezüglich des Blocks B, im Gleichgewichtszustand Domänen mit stark unterschiedlicher Konzentration an Treibmittel vor. Die räumliche Ausdehnung der Bereiche mit unterschiedlicher Treibmittelkonzentration entspricht genau der Längenskala der Mikrophasenseparation des Blockcopolymers, d.h. typischerweise im Bereich von etwa 10 bis 200 nm, sofern die Domänen sich durch die Aufnahme des Treibmittels nicht vergrößern.

Die Löslichkeit des Treibmittels in der die Domänen bildenden Phase relativ zur Löslichkeit in der angrenzenden Phase bezieht sich vorzugsweise auf eine Temperatur von 60 °C und Atmosphärendruck.

Die Messung der Löslichkeit erfolgt vorzugsweise in einer Magnet-Schwebewaage-Apparatur, mit der die Löslichkeit des Treibmittels im Polymer gravimetrisch als Funktion des Drucks und der Temperatur bestimmt werden kann. Derartige Apparaturen und Methoden sind dem Fachmann bekannt.

Ähnliches gilt in der Regel auch für die erwähnten Emulsionspolymerisations-Teilchen: das Treibmittelsorptionsvermögen und damit die Konzentration des Treibmittels in den Teilchen (bei Kern-Schale-Teilchen insbesondere im Kern) unterscheidet sich deutlich vom Treibmittelsorptionsvermögen der Matrix.

Wird eine derartige mit einem selektiven Treibmittel versehene mikrophasenseparierte Polymermischung expandiert, beispielsweise durch Erhitzen, so erfolgt aufgrund der nicht-homogenen Verteilung des Treibmittels die Blasenbildung bevorzugt in denjenigen Mikrophasen, welche die höhere Treibmittelkonzentration aufweisen. Wählt man z.B. ein Blockcopolymer oder eine entsprechende Mischung aus einem Blockcopolymer und einem Homopolymer, das isolierte sphärische Domänen enthält, so ergibt sich die theoretische Keimbildungszahl im porösen Werkstoff aus der Dichte der Mikrodomänen.

Die Treibmittel werden daher entsprechend der Löslichkeit der Polymeren oder Polymersegmente der mehrphasigen Polymermischung ausgewählt. Bevorzugt ist das Treibmittel ausgewählt aus Kohlenwasserstoffen, Wasser, Alkoholen, Ketonen, Ethern, Alkylestern und Alkylamiden.

Das Treibmittel kann leichtflüchtig sein, beispielsweise einen Siedepunkt unter 120°C bei 1013 mbar aufweisen. Derartige leichtflüchtige Treibmittel verflüchtigen sich in der Regel teilweise oder vollständig entweder bei der Formteilherstellung oder aus dem fertigen Formteil. Jedoch sind auch schwerflüchtige Treibmittel geeignet, die üblicherweise zumindest partiell im Formteil verbleiben. Als schwerflüchtige Treibmittel sind auch oligomere oder polymere Substanzen geeignet, die selektiv mit der gewünschten Phase mischbar sind.

Beispielhaft seien die folgenden Treibmittel genannt: Als Kohlenwasserstoffe eignen sich niedermolekulare C₂₋₈- Kohlenwasserstoffe, Mineralöle, insbesondere solche mit einer dynamischen Viskosität bei 25°C von mehr als 50 mPa.s (nach ASTM D445), oder Kohlenwasserstoff-Wachse mit einem Erweichungspunkt von maximal 130°C.

Als Alkohole kommen Methanol, Ethanol, n-Propanol, iso-Proanol, Glycerin, Phenole und Fettsäurealkoxylate und -propoxylate in Betracht, bevorzugt Methanol und Ethanol. Geeignete Ketone sind Aceton, oder Methylethyl-keton. Als Ether eigen sich Polyethylenglycole, Polypropylenglycole oder Ethylenoxid-Propylenoxid-Blockcopolymere.

Geeignete Alkylester sind z. B. Essigsäuremethyl- und -ethylester, Phthalsäureester, Adipinsäureester und 1,2-Cyclohexandicarbonsäureester. Als Alkylamide eignen sich beispielsweise Stearylamid, Behenylamid, N,N-Bis-stearylamid und N,N'-Bis-ethylendiamin-stearamid. Selbstverständlich kann man auch Treibmittelmischungen verwenden.

Bei einer Polymermischung, die aus Polystyrol und einer polaren Domänen bildenden Phase, beispielsweise aus Acrylat oder Methacrylat besteht, wird bevorzugt ein Alkohol wie Ethanol oder Methanol verwendet.

Die Menge des Treibmittels beträgt beispielsweise 0,01 bis 20, bevorzugt 0,1 bis 15 und besonders bevorzugt 0,5 bis 10 Gew.-%, bezogen auf die mehrphasige Polymermischung aus Stufe a).

Zusätzlich zum Treibmittel kann man ein Cotreibmittel mitverwenden. Bevorzugt ist dieses fakulative Cotreibmittel ausgewählt aus Kohlendioxid, Stickstoff, Fluorkohlenwasserstoffen und Edelgasen. Besonders bevorzugt sind CO₂ und N₂, insbesondere N₂.

Sofern man ein Cotreibmittel mitverwendet, beträgt seine Menge üblicherweise 0,01 bis 20, bevorzugt 0,1 bis 10 und insbesondere 1 bis 8 Gew.-%, bezogen auf die mehrphasige Polymermischung aus Stufe a).

Treibmittel und Cotreibmittel können getrennt voneinander oder als Mischung zugefügt werden. Besonders bevorzugt ist Methanol oder Ethanol als Treibmittel und N₂ als Cotreibmittel. Besonders bevorzugt sind auch schwer flüchtige Treibmittel und N₂. Besonders bevorzugt werden die Treibmittel derart gewählt, dass sie organoleptisch unauffällig und für Lebensmittel-Anwendungen behördlich zugelassen sind.

Die in Stufe b) erhaltene treibmittelhaltige mehrphasige Polymermischung ist in der Regel (schmelz)flüssig. Bevorzugt ist die in Stufe b) erhaltene treibmittelhaltige mehrphasige Polymermischung fließfähig.

In Stufe c) wird diese treibmittelhaltige, mehrphasige Polymermischung expandiert. Dabei wird die Polymermischung in eine Kavität, bevorzugt ein Spritzgießwerkzeug, eingebracht und darin expandiert, wodurch man das Formteil erhält. Zu Formteilen zählen auch Halbzeuge wie Rohre, Stäbe, Profile und Platten und insbesondere solche Formteile, die nicht als "endloses" Halbzeug durch kontinuierliche Extrusion und kontinuierliches Abziehen erhältlich sind.

Die Kavität wird durch ein Werkzeug, bevorzugt ein Spritzgießwerkzeug, gebildet, wobei üblicherweise die Raumform der Kavität der Form des gewünschten Formteils entspricht.

Die Polymermischung wird während des Einspritz- und Formgebungsprozesses bei einem solchen Druck und einer solchen Temperatur gehalten, dass das Treibmittel und/oder das Cotreibmittel zu einem gewählten Zeitpunkt entweichen und dabei die Polymermischung expandieren kann. Dabei verfestigt sich die Mischung zum fertigen nanoporösen Formteil. Anschließend wird das Werkzeug geöffnet und das Formteil entnommen.

In einer bevorzugten Ausführungsform des erfindungsgemäßen Verfahrens wird die Polymermischung beim Einspritzen in das Werkzeug bei einem solchen Druck und einer solchen Temperatur gehalten, dass die Polymermischung bereits während des Einspritzens in das Werkzeug zumindest teilweise expandiert.

In einer weiteren bevorzugten Ausführungsform des erfindungsgemäßen Verfahrens wird die Kavität vor dem Einbringen der Polymermischung mit einem Gegen-Druck (p) von mindestens 1,1 bar beaufschlagt. Bevorzugt wird durch die Einstellung eines erhöhten Drucks in der Kavität erreicht, dass eine Expansion während des Einspritzens in das Werkzeug weitgehend unterbleibt. Das Expandieren der Polymermischung erfolgt anschließend durch kontrollierte Verminderung (Abbau) des aufgebauten Drucks in der Polymermischung. Insbesondere beträgt der genannte Gegen-Druck p in der Kavität mindestens 5, besonders bevorzugt mindestens 10 bar. Ebenfalls bevorzugt beträgt der Druck p maximal 1000, bevorzugt 500 und besonders bevorzugt 200 bar.

Der Druck in der Kavität wirkt als Gegendruck, gegen den die einfließende Polymermischung nicht expandieren kann, d.h. die Expansion wird durch einen späteren Druckabbau der Polymermischung kontrolliert. Bevorzugt wird Stufe c) derart ausgestaltet, dass nach der Expansion die Kavität vollständig mit dem porösen Polymer gefüllt ist.

Der Druck in der Polymermischung wird bevorzugt in Abhängigkeit von der Fließfähigkeit der Polymermischung, ihrem Treibmittelgehalt und dem Füllgrad des Werkzeugs vermindert. Der Druckabbau kann kontinuierlich, z.B. linear oder exponentiell, oder diskontinuierlich (stufenförmig) erfolgen. Üblicherweise vermindert man den Druck, bis Umgebungsdruck (z.B. 1013 mbar) erreicht ist. Durch den kontrollierten Druckabbau lassen sich die Dichte und die Porengröße der Formteile steuern. Dichte und Porengröße der Formteile werden darüber hinaus von weiteren Parametern beeinflusst, beispielsweise der Einspritzgeschwindigkeit.

Der kontrollierte Druckabbau der Polymermischung für die Expansion erfolgt mit üblichen Vorrichtungen zu Druckregulierung, mit denen das Werkzeug versehen ist, beispielsweise Pressluftzufuhr, Druckregelventilen, Entlüftungsvorrichtungen sowie durch Volumenvergrößerung durch den Einsatz beweglicher Elemente oder das Bewegen einer oder beider Werkzeughälften oder durch die Höhe von Injektionsdruck und Nachdruck der Spritzgussmaschine. Je nach Größe und Raumform der Kavität kann das Werkzeug zwei- oder mehrteilig sein, und eine oder mehrere Einlassöffnungen (Angüsse) für die Polymermischung aufweisen. Es kann sinnvoll sein, das Formteil im geschlossenen Werkzeug noch eine gewisse Zeit bei konstanter oder variabler Werkzeugtemperatur ruhen bzw. aushärten zu lassen, bevor das Werkzeug geöffnet und das Formteil entnommen wird. Die Fließwege im Werkzeug werden bevorzugt temperierbar ausgeführt (Heißkanaltechnik).

Das erfindungsgemäße Verfahren kann auf an sich bekannten Vorrichtungen durchgeführt werden. Bevorzugt verwendet man zum Herstellen der mehrphasigen Polymermischung (Stufe a)) Mischer oder Kneter, wie sie in der Polymerverarbeitung üblich sind. Bevorzugt sind Extruder mit z.B. ein oder zwei Schnecken. Die Polymermischung kann als solche weiterverarbeitet werden oder als sogenannter Masterbatch anderen Polymeren zugesetzt werden.

Die Temperatur in Stufe a) richtet sich u.a. nach der Polymermischung und beträgt beispielsweise 150 bis 350, insbesondere 180 bis 300°C. Der Druck in Stufe a) liegt üblicherweise bei 1 bis 1000, bevorzugt 1,5 bis 500 bar.

Das Imprägnieren mit dem Treibmittel (Stufe b)) kann beispielsweise ebenfalls auf einem Ein- oder Zweischneckenextruder erfolgen. Um das Einmischen des Treibmittels zu erleichtern, kann man den Extruder mit üblichen Mischelementen versehen, beispielsweise speziellen Schneckenabschnitten mit hoher Scher- bzw. Dispergierwirkung (u.a. Knetblöcke, Stauscheiben, rückfördernde Elemente, Schneckendurchmesser-, - gangzahl- oder -steigungsänderung) oder statischen Mischern. Derartige Extruderkonfigurationen sind dem Fachmann bekannt.

Die Temperatur in Stufe b) richtet sich u.a. nach der Polymermischung und dem Treibmittel und beträgt beispielsweise 100 bis 300, insbesondere 120 bis 280°C. Der Druck in Stufe b) kann beispielsweise 1 bis 1000, bevorzugt 2 bis 500 bar betragen.

Man kann die Stufen a) und b) in getrennten Extrudern, oder bevorzugt in einem einzigen Extruder durchführen.

Die den Extruder nach Stufe b) verlassende treibmittelhaltige Polymermischung kann dann in eine Vorrichtung zur Formteilherstellung überführt werden, beispielsweise eine Spritzgießmaschine. Dieses Überführen geschieht üblicherweise unter einem Druck, der ausreicht ein vorzeitiges Expandieren der Mischung zu vermeiden.

Gemäß einer bevorzugten Ausführungsform wird die Polymermischung in fließfähiger Form in die Kavität eingebracht. Bevorzugt ist die Kavität im Rahmen des erfindungsgemäßen Verfahrens ein Spritzgießwerkzeug.

In einer besonders bevorzugten Ausführungsform erfolgen mindestens die Stufen b) und c) in einer Spritzgießmaschine. Dies bedeutet, dass das Treibmittel unmittelbar in die Spritzgießmaschine eindosiert wird (sog. Direktbegasung). Weniger flüchtige Treibmittel können auch bereits in Stufe a) zugesetzt werden. In diesen Fällen ist es zweckmäßig, das Cotreibmittel in Stufe b) zuzusetzen. Das Treibmittel und/oder das Cotreibmittel können beispielsweise in die Plastifiziereinheit oder während des Einspritzens über eine Fluidinjektionsdüse zudosiert werden.

Zur Verbesserung der Treibmitteleinmischung kann die Spritzgießmaschine insbesondere im Bereich der Treibmittelzudosierung oder stromabwärts mit Mischelementen versehen sein, wie sie bei dem Extruder bereits beschrieben wurden.

Der Begriff Spritzgießmaschine umfasst dabei bevorzugt zumindest die Elemente Plastifiziereinheit, worin die Plastifizierung der Formmasse erfolgt, und ein Spritzgießwerkzeug, welches eine Form ist, in welche die fließfähige Formmasse eingespritzt wird.

Es ist auch möglich, zunächst aus thermoplastischem Polymer, z.B. Styrolpolymer, und der Domänen bildenden Phase, beispielsweise Emulsionspolymerisations-Teilchen (obige Ausführungsform 1)) oder Blockcopolymere mit unverträglichen Blöcken (obige Ausführungsform 2)), einen Masterbatch herzustellen, und diesen Masterbatch in der Spritzgießmaschine mit weiterem thermoplastischen Polymer zur fertigen Polymermischung abzumischen. Dabei wird bevorzugt das Treibmittel bereits dem Masterbatch, und das Cotreibmittel - falls mitverwendet - in der Spritzgießmaschine zugefügt.

Die Zykluszeit der Spritzgießmaschine (Einspritzen, Nachdrücken, Entformen) kann je nach Größe und Form des Formteils, Auslegung des Werkzeugs und dem Expansions- und Verfestigungsverhatten der Polymermischung in weiten Grenzen variieren und beträgt beispielsweise 0,5 sec bis 4 min, bevorzugt 1 sec bis 1 min.

Bevorzugt beträgt der mittlere Porendurchmesser des nanoporösen Polymerwerkstoffs, aus dem die Formteile bestehen, von 100 bis 8000 nm. Besonders bevorzugt beträgt er von 250 bis 5000, insbesondere von 300 bis 2500 nm. Ganz besonders bevorzugt beträgt der mittlere Porendurchmesser des nanoporösen Polymerwerkstoffs, aus dem die Formteile bestehen, von 100 bis 1000 nm. Alle angegebenen Mittelwerte sind zahlengewichtete Mittel, sofern nicht anders gekennzeichnet.

Der mittlere Porendurchmesser der nanoporösen Polymerwerkstoffe wird bevorzugt durch Ausmessen elektronenmikroskopischer Aufnahmen des porösen Polymerwerkstoffes mit einem Rasterelektronenmikroskop und anschließender bildanalytischer Auswertung an mindestens 200 Einzelporen und Bestimmung des zahlengewichteten Mittelwertes ermittelt.

Ebenfalls bevorzugt beträgt die Dichte des nanoporösen Polymerwerkstoffs, aus dem die Formteile bestehen, 300 bis 1000 g/l. Insbesondere beträgt die Dichte 350 bis 900, besonders bevorzugt 400 bis 750 g/l.

Mit dem erfindungsgemäßen Verfahren lassen sich nanoporöse Formteile mit geringem Porendurchmesser herstellen. Die Formteile weisen eine geringe Wärmeleitfähigkeit auf und eignen sich deshalb u.a. zur Wärmedämmung im Baugewerbe, bei Kühl- und Gefrierschränken bzw. -truhen oder in Fahrzeugen.

Die Formteile zeigen bevorzugt mindestens eine der folgenden Eigenschaften, verglichen mit identischen Formteilen gleicher Dichte, die keine Nanoporen aufweisen:
- die Zähigkeit der Formteile, beispielsweise bei Schlag- und Stoßbeanspruchung,
- ist verbessert,
- die Duktilität der Formteile, beispielsweise bei Zug- oder Druckbeanspruchung, ist verbessert,
- bei einer dynamischen Langzeitbeanspruchung breiten sich in den Formteilen deutlich weniger Ermüdungsrisse aus,
- die Formteile weisen einen höheren Oberflächenglanz auf.

Beispiel - Bestimmung der Methanolaufnahme von Polystyrol und von Polystyrol enthaltend Domänen im Bereich von 5 bis 200 nm.

Die Adsorption von Methanol wurde bei 60°C und Atmosphärendruck bestimmt, indem die Aufnahme von Methanol im Polymermaterial in Gew.-% als Funktion der Zeit in einem Zeitfenster von 100 Tagen bestimmt wurde. Die Bestimmung der Löslichkeit von Methanol in der Domänen bildenden Phase erfolgt durch Vergleich mit der Löslichkeit im Material der angrenzenden Phase (Matrixmaterial) ohne Domänen.

| Eingesetztes Polymermaterial | Methanolaufnahme nach 20 Tagen in Gew.-% bezogen auf das eingesetzte Polymermaterial | Methanolaufnahme nach 57 Tagen in Gew.-% bezogen auf das eingesetzte Polymermaterial | Methanolaufnahme nach 97 Tagen in Gew.-% bezogen auf das eingesetzte Polymermaterial |
|---|---|---|---|
| Polystyrol | 3,2 | 3,6 | 3,9 |
| Polystyrol mit 16,7 Gew.-% Kern-Schale-Teilchen | 11,7 | 23 | 32,8 |

Als Polystyrol wurde GPPS (general purpose polystyrene) mit einem gewichtsmittleren Molekulargewicht von 200.000 g/mol und einer Schmelzvolumenrate MVR [200°C/5kg] nach ISO1133 von 9,5 ml/10 min eingesetzt. Zur Herstellung der mehrphasigen Polymermischung mit Kern-Schale-Teilchen wurde in einer ersten Stufe 50 Gew.-% Methylmethacrylat (MMA) und in einer zweiten Stufe 50 Gew.-% Styrol mit 9,5 pphm Arylsulfonat und 0,5 pphm Dowfax 2A1 als Emulgator in einer Emulsionspolymerisation umgesetzt. Die erste Stufe enthielt dabei 1 Gew.-% Vernetzer (Allylmethacrylat) bezogen auf das Gewicht der ersten Stufe. Die PMMA-Teilchen wiesen nach der ersten Stufe einen mittleren Durchmesser von 49 nm auf. Nach der zweiten Stufe wiesen die PMMA-Teilchen mit Polystyrol-Schale (Kern-Schale-Teilchen) einen mittleren Durchmesser von 61 nm auf. Die mittleren Durchmesser wurden jeweils mittels dynamischer Lichtstreuung bestimmt. Anschließend wurden die Kern-Schale-Teilchen im angegebenen Gewichtsverhältnis in einem Extruder mit Polystyrol gemischt.

Die Methanolaufnahme der Kern-Schale-Teilchen betrug nach 97 Tagen gemäß den Werten in der Tabelle 178 Gew.-% bezogen auf das ursprüngliche Gewicht der Kern-Schale-Teilchen, wohingegen die Methanolaufnahme im Matrixmaterial (Polystyrol) im gleichen Zeitraum lediglich 3,9 Gew.-% betrug.

Das erfindungsgemäße Verfahren erlaubt es, nanoporöse Formteile auf einfache Weise und in wenigen Schritten herzustellen. Beispielsweise kann man das Verfahren vollautomatisiert auf einer Spritzgießmaschine betreiben, wodurch sich hohe Stückzahlen eines Formteils in kurzer Zeit und kostengünstig herstellen lassen. Anders als bei Extrusionsverfahren für endlose Halbzeuge (z.B. Endlosrohre, -stäbe, -profile, -bahnen, -platten) lassen sich mit dem erfindungsgemäßen Verfahren auch Formteile mit sehr komplizierter Geometrie problemlos herstellen.

## Patentansprüche

1. Verfahren zur Herstellung von Formteilen aus nanoporösen Polymerwerkstoffen, umfassend die Stufen
a) Herstellen einer mehrphasigen Polymermischung mit Domänen im Bereich von 5 bis 200 nm,
b) Imprägnieren der Polymermischung mit einem Treibmittel, wobei die Löslichkeit des Treibmittels in der die Domänen bildenden Phase mindestens doppelt so hoch ist wie in den angrenzenden Phasen,
c) Expandieren der treibmittelhaltigen, mehrphasigen Polymermischung, indem die Polymermischung in eine Kavität eingebracht und darin expandiert wird, wodurch man das Formteil erhält.

2. Verfahren nach Anspruch 1, wobei die Polymermischung in fließfähiger Form in die Kavität eingebracht wird.

3. Verfahren nach Anspruch 1 oder 2, wobei die Kavität ein Spritzgießwerkzeug ist.

4. Verfahren nach den Ansprüchen 1 bis 3, wobei mindestens die Stufen b) und c) in einer Spritzgießmaschine erfolgen.

5. Verfahren nach den Ansprüchen 1 bis 4, wobei die Kavität vor dem Einbringen der Polymermischung mit einem Druck von mindestens 1,1 bar beaufschlagt wird und das Expandieren der Polymermischung durch kontrollierte Verminderung dieses Drucks erfolgt.

6. Verfahren nach den Ansprüchen 1 bis 5, wobei die Domänen-bildende Phase im Wesentlichen aus durch Emulsionspolymerisation erhältlichen Kern-Schale-Teilchen besteht.

7. Verfahren nach Anspruch 6, wobei die Teilchen Kern-Schale-Teilchen mit einem Kern aus einem Polyacrylat oder Polymethacrylat sind.

8. Verfahren nach den Ansprüchen 6 oder 7, wobei die Teilchen Kern-Schale-Teilchen mit mindestens einer Schale aus Polystyrol oder Styrol-Acrylnitril-Copolymer sind.

9. Verfahren nach den Ansprüchen 1 bis 5, wobei die Domänen bildende Phase im Wesentlichen aus Blockcopolymeren mit unverträglichen Blöcken besteht.

10. Verfahren nach den Ansprüchen 1 bis 9, wobei die Polymermischung 20 bis 99,99 Gew.-% eines Styrolpolymers enthält.

11. Verfahren nach den Ansprüchen 1 bis 10, wobei das Treibmittel ausgewählt ist aus Kohlenwasserstoffen, Wasser, Alkoholen, Ketonen, Ethern, Alkylestern und Alkylamiden.

12. Verfahren nach den Ansprüchen 1 bis 11, wobei ein Cotreibmittel mitverwendet wird, das ausgewählt ist aus Kohlendioxid, Stickstoff, Fluorkohlenwasserstoffen und Edelgasen.

13. Verfahren nach den Ansprüchen 1 bis 12, wobei der mittlere Porendurchmesser des nanoporösen Polymerwerkstoffs 100 bis 8000 nm beträgt.

14. Verfahren nach den Ansprüchen 1 bis 13, wobei die Dichte des nanoporösen Polymerwerkstoffs 300 bis 1000 g/l beträgt.

## Claims

1. A process for the production of moldings from nanoporous polymer materials, comprising the stages of
a) preparation of a multiphase polymer mixture with domains in the range from 5 to 200 nm,
b) impregnation of the polymer mixture with a blowing agent, where the solubility of the blowing agent in the phase forming the domains is at least twice as high as in the adjacent phases,
c) expansion of the multiphase polymer mixture comprising blowing agent, by introducing the polymer mixture into a cavity and expanding it therein, thus obtaining the molding.

2. The process according to claim 1, where the polymer mixture is introduced in flowable form into the cavity.

3. The process according to claim 1 or 2, where the cavity is an injection mold.

4. The process according to claims 1 to 3, wherein at least stages b) and c) take place in an injection-molding machine.

5. The process according to claims 1 to 4, wherein, prior to introduction of the polymer mixture, the cavity is subjected to a pressure of at least 1.1 bar, and the expansion of the polymer mixture takes place via controlled reduction of this pressure.

6. The process according to claims 1 to 5, wherein the phase forming domains consists essentially of core-shell particles obtainable via emulsion polymerization.

7. The process according to claim 6, wherein the particles are core-shell particles with a core composed of a polyacrylate or polymethacrylate.

8. The process according to claims 6 or 7, wherein the particles are core-shell particles with at least one shell composed of polystyrene or styreneacrylonitrile copolymer.

9. The process according to claims 1 to 5, wherein the phase forming domains is in essence composed of block copolymers having incompatible blocks.

10. The process according to claims 1 to 9, wherein the polymer mixture comprises from 20 to 99.99% by weight of a styrene polymer.

11. The process according to claims 1 to 10, wherein the blowing agent has been selected from hydrocarbons, water, alcohols, ketones, ethers, alkyl esters and alkylamides.

12. The process according to claims 1 to 11, wherein a co-blowing agent is used concomitantly and has been selected from carbon dioxide, nitrogen, fluorocarbons and noble gases.

13. The process according to claims 1 to 12, wherein the average pore diameter of the nanoporous polymer material is from 100 to 8000 nm

14. The process according to claims 1 to 13, wherein the density of the nanoporous polymer material is from 300 to 1000 g/l.

## Revendications

1. Procédé pour la fabrication de pièces moulées à partir de matériaux polymères, comprenant les étapes
a) préparation d'un mélange polyphasique de polymères à domaines dans la plage de 5 à 200 nm,
b) imprégnation du mélange avec un agent d'expansion, la solubilité de l'agent d'expansion dans la phase constituant les domaines étant au moins le double de celle dans les phases adjacentes,
c) expansion du mélange polyphasique de polymères, contenant un agent d'expansion, par introduction de mélange de polymères dans une cavité et expansion de celui-ci dans cette cavité, pour l'obtention d'une pièce moulée.

2. Procédé selon la revendication 1, dans lequel le mélange de polymères est introduit sous forme fluide dans la cavité.

3. Procédé selon la revendication 1 ou 2, dans lequel la cavité est un outil de moulage par injection.

4. Procédé selon les revendications 1 à 3, dans lequel on effectue au moins les étapes b) et c) dans une machine de moulage par injection.

5. Procédé selon les revendications 1 à 4, dans lequel avant d'introduire le mélange de polymères on applique sur la cavité une pression d'au moins 1,1 bar et l'expansion du mélange de polymères s'effectue par diminution réglée de cette pression.

6. Procédé selon les revendications 1 à 5, dans lequel la phase constituant les domaines consiste essentiellement en des particules à noyau-enveloppe pouvant être obtenues par polymérisation en émulsion.

7. Procédé selon la revendication 6, dans lequel les particules sont des particules à noyau-enveloppe comportant un noyau à base d'un polyacrylate ou polyméthacrylate.

8. Procédé selon la revendication 6 ou 7, dans lequel les particules sont des particules à noyau-enveloppe comportant au moins une enveloppe à base de polystyrène ou de copolymère styrène-acrylonitrile.

9. Procédé selon les revendications 1 à 5, dans lequel la phase constituant les domaines consiste essentiellement en copolymères séquencés à séquences incompatibles.

10. Procédé selon les revendications 1 à 9, dans lequel le mélange de polymères contient de 20 à 99,99 % en poids d'un polymère de styrène.

11. Procédé selon les revendications 1 à 10, dans lequel l'agent d'expansion est choisi parmi des hydrocarbures, l'eau, des alcools, des cétones, des éthers, des esters alkyliques et des alkylamides.

12. Procédé selon les revendications 1 à 11, dans lequel on utilise en même temps un co-agent d'expansion, qui est choisi parmi le dioxyde de carbone, l'azote, les hydrocarbures fluorés et les gaz rares.

13. Procédé selon les revendications 1 à 12, dans lequel le diamètre moyen de pore du matériau polymère nanoporeux vaut de 100 à 8 000 nm.

14. Procédé selon les revendications 1 à 13, dans lequel la densité du matériau polymère nanoporeux vaut de 300 à 1 000 g/l.
